(19) Europäisches Patentamt / European Patent Office / Office européen des brevets

(11) **EP 3 019 452 B1**

(12) **FASCICULE DE BREVET EUROPEEN**

(45) Date de publication et mention
de la délivrance du brevet:
**02.12.2020 Bulletin 2020/49**

(21) Numéro de dépôt: **14759287.7**

(22) Date de dépôt: **04.07.2014**

(51) Int Cl.:
*C02F 3/00* (2006.01)     *C02F 3/30* (2006.01)
*C02F 101/16* (2006.01)

(86) Numéro de dépôt international:
**PCT/IB2014/062858**

(87) Numéro de publication internationale:
**WO 2015/004583 (15.01.2015 Gazette 2015/02)**

(54) **PROCÉDÉ ET INSTALLATION DE DÉNITRIFICATION BIOLOGIQUE D'EAUX RÉSIDUAIRES**

VERFAHREN UND VORRICHTUNG ZUR BIOLOGISCHEN DENITRIFIKATION VON ABWASSER

METHOD AND EQUIPMENT FOR THE BIOLOGICAL DENITRIFICATION OF WASTE WATER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **08.07.2013 FR 1356681**

(43) Date de publication de la demande:
**18.05.2016 Bulletin 2016/20**

(73) Titulaire: **Degrémont
92040 Paris La Défense (FR)**

(72) Inventeurs:
• **MANIC, Gildas
F-75020 Paris (FR)**
• **GINESTET, Philippe
F-78117 Chateaufort (FR)**

(74) Mandataire: **IPAZ
16, rue Gaillon
75002 Paris (FR)**

(56) Documents cités:
FR-A1- 2 725 193     FR-A1- 2 954 306
JP-A- 2000 325 991     JP-A- 2006 326 589
JP-A- 2013 039 576     JP-A- 2013 046 885
US-A- 6 129 104     US-A1- 2012 211 417
US-B1- 7 153 429

• **MA Y ET AL: "Improving nutrient removal of the
AAO process by an influent bypass flow by
denitrifying phosphorus removal",
DESALINATION, ELSEVIER, AMSTERDAM, NL,
vol. 246, no. 1-3, 30 septembre 2009 (2009-09-30),
pages 534-544, XP026458461, ISSN: 0011-9164
[extrait le 2009-08-12]**

**Description**

L'invention est relative à un procédé de dénitrification biologique d'eaux résiduaires, du genre de ceux qui comportent une séquence de nitrification-dénitrification suivie, pour une première fraction des eaux, d'une étape de post-dénitrification au cours de laquelle un donneur d'électrons est injecté dans cette première fraction, tandis qu'une deuxième fraction des eaux passe par une dérivation, puis est mélangée à la première fraction en aval de l'étape de post-dénitrification.

La séquence de nitrification-dénitrification permet l'élimination de l'azote ammoniacal par une production de nitrates (nitrification) suivie d'une production d'azote gazeux $N_2$ par dénitrification (élimination des nitrates) qui consiste en la réduction des nitrates en nitrites puis en azote. Les réactions sont catalysées et nécessitent la présence d'un donneur d'électrons, en particulier une source de carbone externe.

Dans les stations d'épuration d'eaux usées, la séquence nitrification-dénitrification peut être réalisée dans l'espace, avec des zones différentes dédiées, et/ou dans un même réacteur séquencé travaillant par fournées, avec dissociation aération-brassage, et parfois même dans certaines conditions de manière simultanée.

L'invention concerne un procédé de dénitrification biologique avec séparation dans l'espace de la nitrification et de la dénitrification sur différentes zones, ce procédé étant applicable aux cultures libres, mixtes et fixées.

Il est connu que la dénitrification est accompagnée non seulement d'une production d'azote gazeux, mais aussi d'une production d'oxydes d'azote, en particulier d'oxyde nitreux ou protoxyde d'azote $N_2O$ qui est un gaz à effet de serre dont le potentiel de réchauffement est trois cent vingt fois plus élevé que celui du dioxyde de carbone $CO_2$ et dont la durée de vie est estimée entre 120 et 150 ans.

Ainsi, le document FR2725193 A1 a pour objet un procédé ainsi qu'une installation de mise en oeuvre du procédé, pour le traitement d'un effluent aqueux. Le procédé inclut une étape de dénitrification biologique en milieu anoxique suivie d'une étape de nitrification biologique en milieu aéré et d'une étape de clarification finale, une partie de la liqueur mixte provenant de ladite étape de nitrification et une partie des boues provenant de la clarification étant re-circulée en dénitrification.

Toutefois, on a cherché à ce que les eaux résiduaires, après mélange de la première fraction traitée en post-dénitrification et de la deuxième fraction qui a contourné cette post-dénitrification, présentent une concentration en nitrates inférieure à une consigne déterminée par la réglementation, qui peut être de l'ordre de 10 mg/L pour la concentration en [$N-NO_3$].

L'invention a pour but, surtout, de fournir un procédé de dénitrification biologique d'eaux résiduaires qui permet d'obtenir, en aval du traitement, une concentration en [$N-NO_3$] inférieure ou égale à une valeur de consigne souhaitée, tout en évitant ou en réduisant la production d'oxyde nitreux $N_2O$.

De préférence, l'invention vise également à traiter les problèmes de dosage du donneur d'électrons, et de réglage du débit de dérivation.

Concernant le dosage du donneur d'électrons, notamment du carbone externe, des risques sont liés au sous-dosage ainsi qu'au surdosage.

Dans le cas d'un sous-dosage, une dénitrification incomplète est créée avec pour conséquence l'accumulation de nitrites dans l'eau traitée : ces nitrites ne permettent pas de diminuer la teneur en azote total TN (ou NGL) de l'effluent final et constituent une demande en oxygène supplémentaire dans l'eau traitée (DBO et DCO). La réduction des nitrates en nitrites est énergétiquement plus efficace pour la flore dénitrifiante concernée. Il en résulte qu'un excès de nitrates au sein du réacteur par rapport au donneur d'électrons disponible va favoriser l'utilisation de ce dernier pour réduire tous les nitrates en nitrites dans un premier temps. Ensuite, et seulement ensuite, les nitrites vont pouvoir être réduits en azote gazeux s'il subsiste des quantités de donneur d'électrons.

Un surdosage, outre le surcoût causé par un surplus de donneur d'électrons, entraîne une augmentation des demandes chimique et biologique en oxygène de l'eau, en sortie de traitement.

La gestion du débit de dérivation est également délicate.

Si le débit de dérivation est excessif, la dérivation engendre des dépassements en azote dans les eaux résiduaires après traitement, constituant généralement un rejet d'usine qui doit satisfaire à des concentrations réglementaires pour l'azote total.

Une sous-estimation du débit de dérivation, ou une absence de dérivation, entraîne une consommation inutile de donneur d'électrons, en particulier de méthanol, liée au traitement de l'oxygène dissous présent dans l'eau et neutralisant une partie du donneur d'électrons injecté, notamment substrat carboné.

Des difficultés sont de plus liées à la métrologie, notamment à propos des capteurs de concentration en N-$NO_3$ qui, selon l'état de la technique actuel, présentent une incertitude de l'ordre de 0,5 mg/L à 1 mg/L qui se trouve proche de plages de concentrations de 0,5 mg/L à 3 mg/L pouvant être souhaitées. Il en résulte que l'erreur relative liée à la mesure est importante, ce qui rend difficile un pilotage efficace de l'injection de donneur d'électrons.

Selon l'invention, le procédé de dénitrification biologique d'eaux résiduaires du genre défini précédemment est tel que :

- le procédé comporte une séquence de nitrification-dénitrification,
- ladite séquence de nitrification-dénitrification permettant l'élimination de l'azote ammoniacal par une production de nitrates (nitrification) suivie d'une production d'azote gazeux N2 par dénitrification (élimination des nitrates) qui consiste en la réduction des nitrates en nitrites puis en azote,
- ladite séquence de nitrification-dénitrification étant suivie, pour une première fraction des eaux, d'une étape de post-dénitrification au cours de laquelle un donneur d'électrons est injecté dans cette première fraction, tandis qu'une deuxième fraction des eaux passe par une dérivation, puis est mélangée à la première fraction en aval de l'étape de post-dénitrification, caractérisé en ce que:
- la première fraction des eaux résiduaires est soumise, lors de la post-dénitrification, à une dénitrification quasi complète afin de sortir de l'étape avec une concentration en nitrates [N-NO$_3$] inférieure à 4 mg/L, pour minimiser la production d'oxyde nitreux N$_2$O,
- et on détermine le taux de dérivation à partir :

  - d'une mesure de la concentration en nitrates [N-NO$_3$] des eaux en amont de la post-dénitrification,
  - de la concentration en nitrates [N-NO$_3$] souhaitée pour le mélange des deux fractions en aval du traitement de post-dénitrification,
  - et de la concentration en nitrates [N-NO$_3$] de la première fraction en sortie de la post-dénitrification, avant mélange des deux fractions,

- et on contrôle l'injection de donneur d'électrons utilisé à l'aide :

  - d'une part, de la mesure (9, 27b) de la concentration en nitrates [N-NO$_3$] des eaux en amont de la post-dénitrification, et de la mesure (10) du débit des eaux résiduaires,
  - et d'autre part, d'une estimation de la charge azotée (concentration [N-NO$_3$]) de la première fraction en sortie de post-dénitrification, avant mélange des deux fractions, cette estimation étant calculée en fonction d'une mesure (14) de la concentration en nitrates [N-NO$_3$] en sortie de traitement après mélange des deux fractions, et du taux de dérivation utilisé,
  - on compare la valeur estimée ou mesurée du débit de donneur d'électrons à une valeur de consigne souhaitée, et on modifie le débit de donneur d'électrons injecté pour réduire l'écart entre valeur estimée et valeur souhaitée.

De préférence, la première fraction des eaux résiduaires sort de l'étape de post-dénitrification avec une concentration en nitrates [N-NO$_3$] inférieure à 2 mg/L.

Selon l'invention, la dénitrification quasi complète effectuée lors de la post-dénitrification limite la production d'oxyde nitreux. Le pourcentage de nitrates réduits est augmenté et le rapport de production N$_2$O/N$_2$ diminue de telle sorte que l'azote N2 devient le principal gaz produit.

Après mélange des deux fractions, la concentration en nitrates des eaux sortant du traitement est plus élevée que celle de la première fraction sortant de la post-dénitrification, mais reste inférieure ou égale à la valeur de consigne souhaitée pour les eaux en sortie de traitement.

Si, contrairement à l'invention, une dénitrification partielle, correspondant à la valeur de consigne souhaitée pour les eaux en sortie de traitement, avait été effectuée sur la totalité des eaux ou sur la majeure partie de ces eaux résiduaires, la production d'oxyde nitreux N$_2$O aurait été plus importante que selon le procédé de l'invention.

Selon l'invention, la dénitrification quasi complète effectuée lors de la post-dénitrification fournit, en sortie, des eaux dont la faible concentration en nitrates ne peut être mesurée avec précision par les capteurs disponibles. Par contre, lorsque le mélange des deux fractions a été effectué, la concentration en nitrates est plus élevée et peut être mesurée avec une précision satisfaisante. A partir de cette valeur et du taux de dérivation, on peut en déduire la concentration en nitrates de la première fraction en sortie de post-dénitrification, ce qui correspond à une mesure en quelque sorte virtuelle. L'estimation de la concentration en nitrates de la première fraction en sortie de post-dénitrification est avantageusement effectuée en logique floue pour définir une plage de valeurs possibles.

De préférence, on contrôle le débit de dérivation en déterminant une valeur du taux de dérivation, selon les concentrations en nitrates souhaitées aux différents endroits du traitement, et on la compare à des valeurs limites supérieure et inférieure, pour retenir une valeur de consigne comprise dans les limites imposées. Selon la comparaison de la valeur de consigne à une valeur mesurée, on agit sur un organe modifiant le débit de dérivation en vue d'atteindre la valeur de consigne. Cette valeur de consigne est choisie pour limiter la perte de donneur d'électrons liée à l'oxygène dissous.

Le donneur d'électrons peut être une source de carbone choisie parmi le méthanol, l'acide acétique, le glycérol ou un composé carboné se dispersant aisément dans un réacteur dénitrifiant.

Généralement, on effectue une mesure de la concentration en nitrates et une mesure d'oxygène dissous dans l'eau en amont de la post-dénitrification pour estimer la charge azotée équivalente.

Selon l'invention, le procédé de dénitrification biologique d'eaux résiduaires peut comporter en variante une séquence de nitrification-dénitrification,
ladite séquence de nitrification-dénitrification permettant l'élimination de l'azote ammoniacal par une production de nitrates (nitrification) suivie d'une production d'azote gazeux N2 par dénitrification (élimination des nitrates) qui consiste en la réduction des nitrates en nitrites puis en azote,
ladite séquence de nitrification-dénitrification étant suivie, pour une première fraction des eaux, d'une étape de post-dénitrification au cours de laquelle un donneur d'électrons est injecté dans cette première fraction, tandis qu'une deuxième fraction des eaux passe par une dérivation, puis est mélangée à la première fraction en aval de l'étape de post-dénitrification,
le procédé étant caractérisé en ce que :

-    la première fraction des eaux résiduaires est soumise, lors de la post-dénitrification, à une dénitrification quasi complète afin de sortir de l'étape avec une concentration en nitrates [N-NO$_3$] inférieure à 4 mg/L, pour minimiser la production d'oxyde nitreux N$_2$O,
-    on détermine le taux de dérivation à partir :

-    d'une mesure de la concentration en nitrates [N-NO$_3$] des eaux en amont de la post-dénitrification,
-    de la concentration en nitrates [N-NO$_3$] souhaitée pour le mélange des deux fractions en aval du traitement de post-dénitrification,
-    et de la concentration en nitrates [N-NO$_3$] de la première fraction en sortie de la post-dénitrification, avant mélange des deux fractions,

-    on mesure le débit d'entrée d'eaux résiduaires à traiter avant dérivation,
-    on calcule le débit de donneur d'électrons pour assurer la dénitrification de la fraction non dérivée en tenant compte du taux de dérivation,
-    on estime la concentration en NO$_3$ en sortie de post dénitrification, avant mélange avec la fraction dérivée, à partir d'une mesure de la concentration en NO$_3$ en aval du mélange de la fraction dérivée et de celle ayant subi la post dénitrification, et du taux de dérivation,
-    un contrôle du débit de dérivation étant assuré pour limiter la perte de substrat carboné lié à l'oxygène dissous.
L'invention est également relative à une installation pour la mise en œuvre du procédé défini précédemment, caractérisée en ce qu'elle comporte
-    des dispositifs de mesure de débit pour:

-    une mesure du débit dénoté par le terme FIT Qe en sortie d'un ouvrage aéré ;
-    une mesure de débit de dérivation, soit par une instrumentation directe, soit par estimation à partir d'une mesure du débit d'entrée dénoté par le terme FIT Qe et du débit d'alimentation de la post dénitrification ;
-    une mesure de débit en entrée d'ouvrage post dénitrification, soit par instrumentation, soit par estimation à partir d'une mesure du débit d'entrée dénoté par le terme FIT Qe et d'une mesure du débit de dérivation dénoté par le terme FIT Qbp ;

-    un dispositif de régulation du débit de dérivation :
-    des systèmes de mesure de qualité d'eau, avec transmetteur adéquat ;
-    un dispositif de régulation du débit de donneur d'électrons.

L'invention consiste, mises à part les dispositions exposées ci-dessus, en un certain nombre d'autres dispositions dont il sera plus explicitement question ci-après à propos d'un exemple de réalisation décrit avec référence aux dessins annexés, mais qui n'est nullement limitatif. Sur ces dessins :

Fig. 1 est un schéma d'un procédé de dénitrification selon l'invention.
Fig. 2 est un schéma d'une installation pour la mise en œuvre du procédé.
Fig. 3 est un ordinogramme illustrant la détermination de la consigne de débit de dérivation.
Fig. 4 est un ordinogramme illustrant la détermination de la consigne de débit de donneur d'électrons.
Fig. 5 est un graphique illustrant une variation du débit d'eaux brutes et de la teneur en oxygène dissous, portés en ordonnée, en fonction du temps, porté en abscisse, pour une journée, et
Fig. 6 illustre le profil journalier de la concentration [N-NO$_3$] portée en ordonnée, en entrée de la post-dénitrification, le temps étant porté en abscisse.

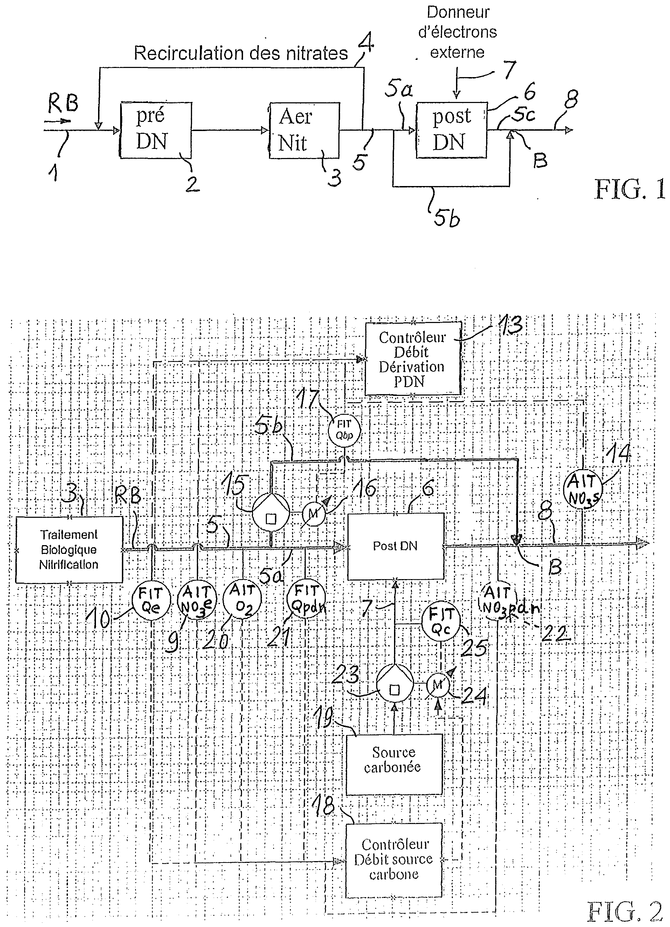

En se reportant à Fig. 1, on peut voir un schéma du procédé de dénitrification biologique d'eaux résiduaires RB arrivant par une conduite 1. Les eaux RB sont soumises à une pré-dénitrification ou pré DN dans un bassin 2, et à une séquence de nitrification dans un bassin aéré 3. Une recirculation 4 des nitrates est prévue entre la sortie du bassin 3 et l'entrée du bassin 2.

Les eaux provenant du bassin 3 sont dirigées par une conduite 5 vers un bassin 6 de post-dénitrification, ou post DN.

Une première fraction des eaux est introduite par une conduite 5a dans le bassin 6 pour y subir le traitement post DN au cours duquel est injecté dans la fraction, comme indiqué par la flèche 7, un donneur d'électrons externe, en particulier une source de carbone telle que du méthanol.

Une deuxième fraction des eaux passe par une dérivation 5b et n'est pas soumise au traitement post DN du bassin 6. La première fraction et la deuxième fraction se rejoignent et se mélangent en B, en aval du bassin de traitement 6. Le mélange est évacué par une conduite 8.

La concentration en nitrates $[N-NO_3]$ après mélange, dans la conduite 8, doit être inférieure à une valeur de consigne, par exemple 10 mg/L. Une telle concentration peut être mesurée avec une précision satisfaisante, par les capteurs de l'état de la technique dont l'incertitude est de l'ordre de 0,5 à 1 mg/L. Par contre, pour des concentrations plus faibles de l'ordre de 3 ou 4 mg/L, l'incertitude d'une mesure devient trop importante.

La dénitrification, lors de l'étape post DN, s'accompagne d'une production d'oxyde nitreux $N_2O$ qu'il convient de limiter ou de supprimer.

Selon l'invention, la post-dénitrification effectuée dans le bassin 6 correspond à une dénitrification quasiment complète de sorte que cette fraction sortant par la conduite 5c présente une concentration $[N-NO_3]$ inférieure à 4 mg/L. Cette dénitrification particulièrement poussée permet de réduire la production d'oxyde nitreux $N_2O$, ce qui ne serait pas le cas si une dénitrification incomplète ou partielle avait été appliquée à la totalité des eaux résiduaires. La valeur de consigne de concentration $[N-NO_3]$ en sortie de la post DN est désignée par $CNNO_3$ pdn.

La valeur de consigne de la concentration du mélange dans la conduite 8 est désignée par $CNNO_3$ s.

Une mesure de la concentration $[N-NO_3]$ des eaux en amont de la post DN 6 est assurée par un capteur 9 (Fig. 2) dont la mesure est désignée par AIT $NO_3$ e.

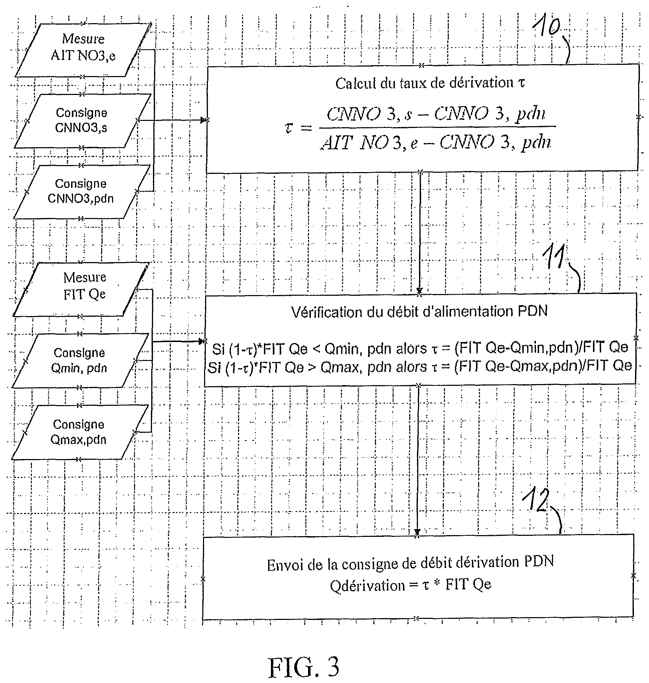

Comme illustré sur Fig. 3, dans la case 10, le taux de dérivation est déterminé par la relation :

$$\tau = (CNNO_3\ s - CNNO_3\ pdn) / (AIT\ NO_3\ e - CNNO_3\ pdn)$$

Ce taux de dérivation permet de déterminer un débit d'alimentation théorique de la post DN 6 par la conduite 5a, comme expliqué ci-après :

- le débit total des eaux résiduaires, en amont de la dérivation 5b, est mesuré par un capteur 10 (Fig. 2) qui donne le débit désigné par FIT Qe ;
- le débit d'alimentation de la post DN 6 est égal à $(1 - \tau)$ fois le débit total, soit $(1 - \tau) \times$ FIT Qe.

Ce débit d'alimentation calculé pour la post DN doit être confronté aux exigences de l'installation qui permettent de déterminer un débit minimum Qmin et un débit maximum Qmax pour la post DN 6, comme indiqué dans le cadre 11 de Fig.3.

Si le débit de dérivation donné par le cadre 10 est inférieur à Qmin, alors c'est cette valeur de Qmin qui est retenue pour le débit de dérivation de sorte que le taux devient égal à $\tau = $ (FIT Qe - Qmin pdn)/FIT Qe.

De la même manière, si le débit de dérivation donné par le cadre 10 est supérieur à Qmax pdn, alors le taux de dérivation est pris égal à $\tau = $ (FIT Qe - Qmax pdn)/FIT Qe.

Finalement, la consigne de débit de dérivation est fournie par le cadre 12 (Fig. 3) et est prise en compte par un contrôleur 13 (Fig. 2) du débit de dérivation qui reçoit les mesures fournies par les capteurs 9, 10, ainsi que par un capteur 14 installé sur la conduite 8 de sortie du mélange, et fournissant la concentration en nitrates désignée par AIT $NO_3$ s.

Le débit de dérivation peut être assuré par une pompe 15 (Fig. 2) installée sur la conduite 5b et entraînée par un moteur 16 à vitesse réglable. Le débit dans la conduite de dérivation 5b est mesuré par un capteur 17 et la valeur du débit est désignée par FIT Qbp. Cette mesure est transmise au contrôleur 13 qui compare la valeur de consigne, du cadre 12 de Fig. 3, à la valeur mesurée fournie par le capteur 17. Le contrôleur 13 commande en conséquence la vitesse du moteur 16 soit pour augmenter le débit dans la conduite 5b si la valeur mesurée est inférieure à la valeur de consigne, soit pour réduire la vitesse du moteur 16 si la valeur mesurée est supérieure à la valeur de consigne.

La gestion du débit de dérivation par le contrôleur 13 permet d'éviter :

- une surestimation du débit de dérivation qui, s'il est excessif, engendre des dépassements en azote dans le rejet de l'installation de traitement par la conduite 8 ;
- une sous-estimation du débit de dérivation, lequel, s'il est insuffisant, entraîne une consommation inutile de donneur d'électrons dans la post DN 6, en particulier consommation inutile de méthanol, liée au traitement de l'oxygène dissous présent dans l'eau résiduaire et neutralisant une partie du donneur d'électrons injecté, notamment substrat carboné.

Le contrôle de l'injection de donneur d'électrons est effectué à l'aide d'un contrôleur 18 (Fig. 2). Le donneur d'électrons, dans la plupart des cas, provient d'une source 19 de carbone externe, c'est-à-dire non apportée par l'eau résiduaire. La source de carbone peut être du méthanol, de l'acide acétique, du glycérol, ou tout composé carboné qui peut être aisément dispersé dans l'eau résiduaire soumise à la post DN 6.

Le contrôleur 18 reçoit :

- les mesures effectuées par les capteurs 9 et 10,
- la mesure de concentration en oxygène dissous $O_2$ dans l'eau brute arrivant par la conduite 5, effectuée par un capteur 20 donnant la valeur AIT $O_2$,
- ainsi que la mesure du débit de liquide entrant en post DN fournie par un capteur 21 qui donne la grandeur FIT Q pdn.

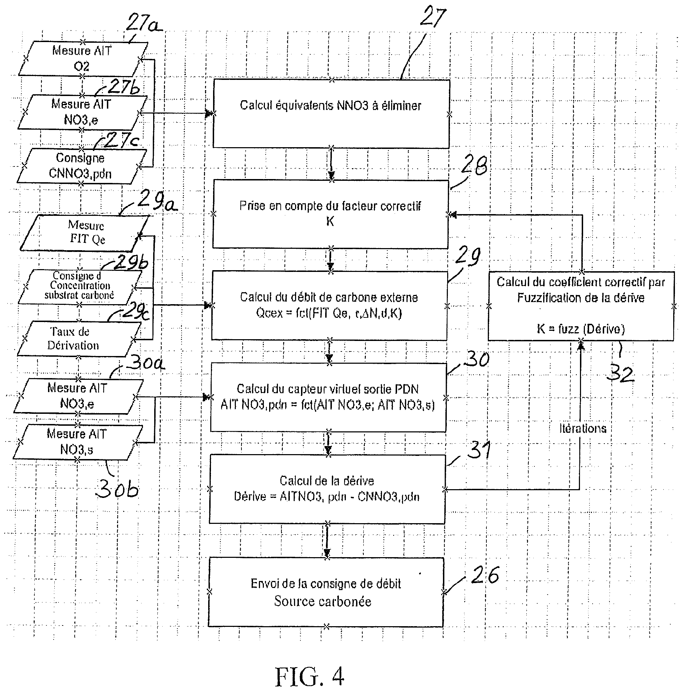

L'estimation de la concentration en nitrates en sortie du réacteur 6 et en amont du branchement B de la dérivation sur la conduite est effectuée par le calcul, comme exposé à propos de Fig.4, et de la case 30 décrite plus loin. Un capteur « virtuel » 22 a été représenté en tirets en sortie du réacteur 6 pour rappeler que le contrôleur 18 prend en compte une valeur AIT $NO_3$ pdn de la concentration en nitrates en sortie de post DN.

L'injection 7 de donneur d'électrons peut être assurée par une pompe 23 entraînée par un moteur 24 à vitesse variable commandé par le contrôleur 18. Un capteur 25 mesure le débit FIT Qc de donneur d'électrons injecté en 7. La mesure du capteur 25 est envoyée au contrôleur 18.

La détermination de la consigne de débit de donneur d'électrons, notamment provenant de source carbonée 19, est effectuée par le contrôleur 18 selon l'ordinogramme illustré sur Fig. 4, la consigne de débit calculée étant fournie dans la case 26.

La case de départ 27 assure le calcul des équivalents $NNO_3$ à éliminer dans les eaux résiduaires. Ce calcul s'effectue à l'aide des mesures suivantes :

- mesure AIT $O_2$, de la concentration en oxygène dissous, fournie par le capteur 20, comme indiqué dans la case 27a ;
- mesure AIT $NO_3$ e de la concentration en nitrates, fournie par le capteur 9, comme indiqué dans la case 27b ;
- et consigne $CNNO_3$ pdn en sortie de la post DN 6, comme indiqué dans la case 27c.

Le résultat du calcul de la case 27 est transféré à une case 28 qui prend en compte un facteur correctif K précisé plus loin.

La valeur corrigée des équivalents $NNO_3$ à éliminer est transférée de la case 28 à une case 29 qui assure le calcul du débit de donneur d'électrons, le carbone externe dans l'exemple considéré, à fournir pour assurer l'élimination souhaité d'équivalents $NNO_3$. Le calcul de la case 29 est effectué à l'aide du débit FIT Qe d'eaux résiduaires fourni par une case 29a liée au capteur 10, de la consigne de concentration du donneur d'électrons fournie par la case 29b et du taux de dérivation apparaissant dans la case 29c et fourni par la case 12 de Fig. 3.

La valeur du débit de donneur d'électrons calculée par la case 29 est transférée à une case 30 pour le calcul de la concentration en nitrates AIT $NO_3$ pdn en sortie de la post DN 6. Ce calcul est effectué à l'aide de la mesure AIT $NO_3$ e de la concentration en nitrates des eaux résiduaires à traiter, laquelle mesure est fournie à une case 30a par le capteur 9 (Fig. 2), ainsi qu'à l'aide de la mesure AIT $NO_3$ s de la concentration en nitrates dans la conduite de sortie 8, mesure fournie à une case 30b par le capteur 14 (Fig. 2).

La valeur calculée par la case 30 est transférée à la case 31 qui calcule la dérive entre la concentration en nitrates AIT $NO_3$ pdn estimée en sortie de post DN, et la consigne $CNNO_3$ pdn. La dérive calculée est envoyée sur une case 32 qui calcule le coefficient correctif K par logique floue ou fuzzification. Le calcul provenant de la case 32 est envoyé sur la case 28 pour que le coefficient K = fuzz (Dérive) soit pris en compte.

Une consigne de débit est finalement obtenue dans la case 26, après plusieurs itérations provenant de la case 31 sur la case 32.

Le procédé de l'invention permet de surmonter les difficultés liées à la métrologie et exposées ci-après.

- L'estimation de la "charge azotée équivalente" en entrée de l'étape de post DN 6 est soumise à des incertitudes car, pour cela, il est nécessaire de connaître les concentrations en $N\text{-}NO_3$, $N\text{-}NO_2$ et en oxygène dissous.
  Or, il n'existe pas actuellement de moyens fiables permettant de connaître les concentrations en nitrites $N\text{-}NO_2$.
  Selon l'invention, la dénitrification quasi complète de la première fraction permet de se prémunir de la formation de nitrites.

Par contre, les concentrations en nitrates N-NO$_3$ et en oxygène dissous sont mesurées avec une précision suffisante dans les eaux résiduaires en amont de la post DN 6.

- L'estimation de la charge azotée en sortie de post DN, qui permettrait de corriger la régulation de l'injection de donneur d'électrons, en particulier de carbone externe, est délicate en raison de l'incertitude des capteurs de N-NO$_3$, incertitudes de l'ordre de 0,5 mg/L à 1 mg/L.

Selon l'invention, la charge azotée en sortie de la post DN est obtenue par une mesure virtuelle, résultant d'un calcul à partir du taux de dérivation, et de la concentration en nitrates du mélange des deux fractions. Cette concentration est plus élevée qu'en sortie de post DN et permet une mesure dont la précision relative est améliorée.

L'invention permet de maximiser en permanence le potentiel épuratoire de la post-dénitrification avec :

- une minimisation de la production de N$_2$O, en garantissant quel que soit l'objectif fixé en rejet de N-NO$_3$, une conduite poussée de la dénitrification sur l'ouvrage concerné ;
- un contrôle de la quantité de donneur d'électrons, notamment carbone externe, utilisée pour la dénitrification, cette quantité étant déterminée à l'aide, d'une part, d'une mesure en amont de la dénitrification, et d'autre part d'une mesure virtuelle aval, calculée en fonction d'une mesure en sortie de l'installation et du taux de dérivation utilisé, servant à la correction du contrôle par un traitement en logique floue du signal ;
- un contrôle du débit de dérivation pour limiter la perte de donneur d'électrons, notamment substrat carboné, liée à l'oxygène dissous.

L'installation pour la mise en œuvre du procédé se compose des éléments suivants :

*trois dispositifs de mesure de débit pour:*

- une mesure du débit dénoté par le terme FIT Qe en sortie d'ouvrage aéré par un capteur 10 ;
- une mesure de débit de dérivation, soit par une instrumentation directe à l'aide du capteur 17 donnant le débit dénoté par le terme FIT Qbp, soit par estimation à partir du débit d'entrée dénoté par le terme FIT Qe et du débit d'alimentation dénoté par le terme FIT Qpdn de la post DN fourni par un capteur 21 donnant ledit débit dénoté par le terme FIT Qpdn ;
- une mesure de débit en entrée d'ouvrage post DN, soit par instrumentation directe avec le capteur 21 donnant ledit débit dénoté par le terme FIT Qpdn, soit par estimation à partir du débit d'entrée dénoté par le terme FIT Qe et du débit de dérivation dénoté par le terme FIT Qbp ;

*un dispositif de régulation du débit de dérivation :*

- soit par variation de fréquence sur le ou les moteur(s) 16 de pompe 15 du débit de dérivation, ou du débit d'alimentation de la post-dénitrification, si ces débits sont assurés par pompage ;
- soit par variation de l'ouverture d'un dispositif de régulation du débit du type vanne de régulation ou tout autre instrument permettant une régulation de débit ;

*- plusieurs systèmes de mesure de qualité d'eau, avec transmetteur adéquat :*

- une sonde ou un analyseur de nitrates 9 situé à la sortie du réacteur aéré, ou bassin 3, et donnant la concentration AIT NO$_3$ e ;
- une sonde ou analyseur 20 d'oxygène dissous situé à la sortie du réacteur aéré et donnant la concentration AIT O$_2$ ;
- une sonde ou analyseur de nitrates 14 situé en sortie d'installation après mélange des deux fractions et donnant la concentration AIT NO$_3$ s ;
- une pompe doseuse 23 de donneur d'électrons, notamment à partir d'une source de carbone externe 19 ;
- un capteur 25 de mesure de débit de la solution de donneur d'électrons envoyée dans le réacteur 6 de post DN ;
- un moyen de calcul, intégré dans le contrôleur 18, permettant d'effectuer une mesure virtuelle de la performance du réacteur 6 de post DN à partir de la concentration AIT NO$_3$ s, du taux de dérivation et de la concentration en entrée AIT NO$_3$ e.

Lors de la mise en service de la régulation, les consignes suivantes sont à fixer :

- consigne CNNO$_3$ s de la concentration en nitrates N-NO3 en sortie de l'installation, après le mélange des deux fractions sortant du réacteur 6 de post DN, et de la dérivation. Cette consigne est réglée en fonction des objectifs de rejet de l'installation ;

- consigne CNNO$_3$ pdn de la concentration en nitrates N-NO$_3$, en sortie du réacteur 6 de post DN. Cette consigne ne doit pas excéder 4 mg/L et de préférence doit être inférieure à 2 mg/L, pour se prémunir d'un risque de dénitrification incomplète ;
- les débits minimum Qmin pdn et maximum Qmax pdn d'alimentation du réacteur 6 de post DN, ces débits étant à régler selon les paramètres physiques liés au procédé employé, notamment vitesse pour les biofiltres, temps de séjour pour les bioréacteurs à membranes désignés en abrégé par MBBR, ou pour les boues activées.

Le fonctionnement du procédé et de l'installation résulte des explications qui précèdent.

Le contrôleur 13 de débit de dérivation calcule la consigne de débit de dérivation Q$_{dérivation}$ en se basant sur les mesures physiques exposées précédemment et en appliquant l'ordinogramme de Fig. 3. Le débit de la pompe 15 est réglé à partir de cette valeur de consigne.

Le calcul de la consigne de débit de donneur d'électrons, notamment de carbone externe, par le contrôleur 18 est effectué en plusieurs étapes :

- un premier calcul du débit de donneur d'électrons nécessaire est effectué à partir de la mesure du flux d'azote en entrée à partir du débit FIT Qpdn fourni par le capteur 21 et de la concentration en nitrates AIT NO$_3$e fournie par le capteur 9 ;
- une mesure virtuelle AIT NO$_3$pdn de la concentration en nitrates en sortie du réacteur 6 est calculée d'après la mesure AIT NO$_3$s fournie par le capteur 14, la mesure en entrée AIT NO$_3$e fournie par le capteur 9, et le taux de dérivation ;
- un second calcul du débit de donneur d'électrons est effectué par le contrôleur 18 en corrigeant le résultat obtenu en fonction de l'écart entre la mesure virtuelle calculée en sortie de réacteur 6 de post DN, et la consigne souhaitée CNNO$_3$pdn. Le calcul est effectué par le contrôleur 18 sous forme de plages de valeurs en logique floue, afin de se prémunir des incertitudes liées à la métrologie. L'ordinogramme de Fig. 4 illustre ce calcul.

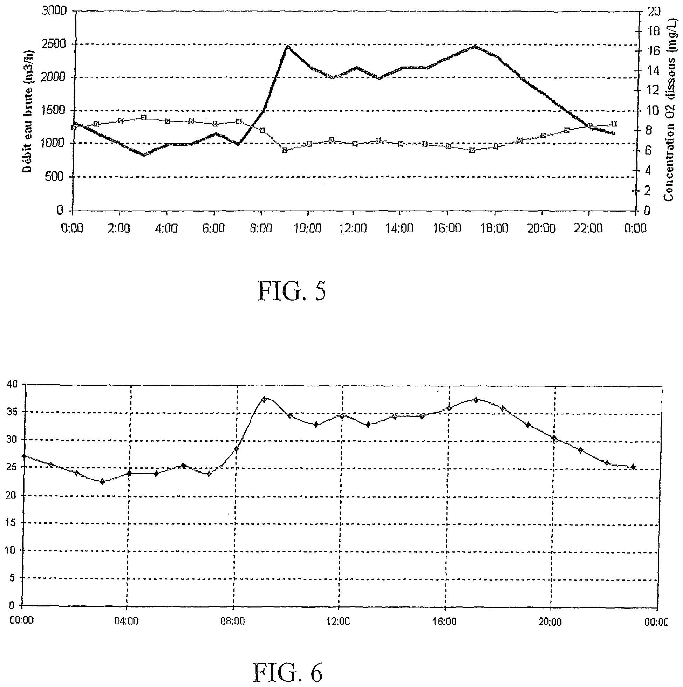

Une comparaison entre un procédé de dénitrification avec régulation classique et le procédé de l'invention a été effectuée par le calcul pour un cas d'étude selon les Fig. 5 et 6.

Fig. 5 illustre un exemple de profil journalier de débit d'eau brute représenté en trait plein épais, et d'oxygène dissous représenté en trait plus fin avec des carrés espacés. Le débit d'eau brute est porté en ordonnée à gauche et est exprimé en mètres cubes par heure (m$^3$/h) tandis que la concentration en oxygène dissous est portée sur l'axe de droite des ordonnées et est exprimée en mg/L. Le temps exprimé en heures est porté en abscisse.

Fig. 6 illustre le profil journalier de concentration en nitrates [N-NO$_3$] en entrée de post DN, les valeurs étant portées en ordonnée à gauche et exprimées en mg/L. Le temps est porté en abscisse en heures.

L'exemple concerne une usine de traitement par biofiltration d'eaux résiduaires urbaines, d'une capacité de traitement de 200 000 équivalents habitants, recevant un débit moyen de 39 600 m$^3$/jour. L'objectif de traitement de l'azote est fixé en azote total TN ou NGL, en sortie d'usine, à NGL 15 mg/L. La consigne visée de traitement des nitrates est fixée à [N-NO$_3$] = 10 mg/L. Le substrat carboné utilisé est du méthanol.

Préalablement à l'étape de post DN sont installées des étapes de traitement primaire et de traitement biologique secondaire par biofiltres aérés traitant le carbone et l'azote. Comme visible d'après Fig. 5, la concentration en oxygène dissous augmente en période de faible charge, en liaison avec l'aération des étages de biofiltration aérée.

A qualité d'effluent égale en teneur de nitrates, deux scénarios ont été étudiés :

- Cas 1 : régulation classique à l'aide d'une mesure de nitrates en entrée de post DN. Le circuit de dérivation n'est pas utilisé.
- Cas 2 : mise en place de la régulation selon le procédé de l'invention à l'aide du calcul de taux de dérivation automatique et des mesures entrée/sortie de concentration en nitrates avec correction par logique floue.

Dans le Cas 1, l'exploitant fait passer l'intégralité du débit d'eau à traiter par l'étape de post DN, en ajustant la régulation de manière à obtenir la concentration [N-NO$_3$] à 10 mg/L, au travers d'une dénitrification partielle correspondant à une moyenne de 60 % de rendement ou d'abattement.

Dans le Cas 2, l'exploitant utilise les possibilités offertes par la dérivation pour effectuer une dénitrification complète sur une fraction de l'effluent (94 % de rendement de dénitrification) et mélanger le courant de dérivation aux eaux ainsi traitées pour obtenir une concentration moyenne [N-NO$_3$] au rejet de 10 mg/L.

Les calculs font apparaître que, selon l'invention (Cas 2), le gain en méthanol (diminution de consommation) obtenu est de 6 %, par rapport au Cas 1, avec les observations suivantes :

- bien que la dénitrification menée dans le Cas 2 sur la fraction soumise à ce traitement soit plus poussée, ce qui comparativement à un rendement moins important entraîne un surcroît de consommation en donneur d'électrons (carbone externe), la consommation en donneur d'électrons est moins importante que pour le Cas 1 car le flux d'oxygène dissous envoyé dans le réacteur de post DN est plus faible ;
- la qualité au rejet dans le Cas 1 est aléatoire car la concentration en nitrites, non mesurée, est susceptible d'être importante puisque la dénitrification effectuée est incomplète ;
- l'émission de gaz à effet de serre dans le Cas 1 est importante car le nitrate n'est pas complètement réduit en $N_2$ gazeux, ce qui entraîne une forte production d'oxyde nitreux $N_2O$ ;
- la régulation classique du Cas 1 a été envisagée en présupposant une absence de perturbations sur la mesure en entrée, ce qui reste hypothétique car un rétrocontrôle n'est pas possible.

L'invention peut s'appliquer à tous types de réacteur 6 de post DN, notamment à des réacteurs :

- à cultures libres (boues activées, bioréacteurs à membranes) ;
- à cultures fixées (biofiltres, biodisques, lits bactériens immergés, MBBR,...) ;
- à cultures mixtes (IFAS qui est un procédé biologique à culture mixte qui combine le traitement du carbone par une culture libre, et le traitement de l'azote par une culture fixée) ;

Le traitement selon le procédé de l'invention peut se situer en aval d'un réacteur aéré consistant en :

- une culture libre (boues activées, bioréacteurs à membrane, réacteurs « batch » ou par fournées) ;
- une culture fixée (biofiltres, biodisques, lits bactériens immergés, MBBR) ;
- une culture mixte (IFAS).

**Revendications**

1. Procédé de dénitrification biologique d'eaux résiduaires qui comporte une séquence de nitrification-dénitrification, ladite séquence de nitrification-dénitrification permettant l'élimination de l'azote ammoniacal par une production de nitrates (nitrification) suivie d'une production d'azote gazeux $N_2$ par dénitrification (élimination des nitrates) qui consiste en la réduction des nitrates en nitrites puis en azote,
ladite séquence de nitrification-dénitrification étant suivie, pour une première fraction des eaux, d'une étape de post-dénitrification au cours de laquelle un donneur d'électrons est injecté dans cette première fraction, tandis qu'une deuxième fraction des eaux passe par une dérivation, puis est mélangée à la première fraction en aval de l'étape de post-dénitrification,
**caractérisé en ce que** :

   - la première fraction des eaux résiduaires est soumise, lors de la post-dénitrification, à une dénitrification quasi complète afin de sortir de l'étape avec une concentration en nitrates [N-NO$_3$] inférieure à 4 mg/L, pour minimiser la production d'oxyde nitreux $N_2O$,
   - et on détermine le taux de dérivation à partir :

      - d'une mesure de la concentration en nitrates [N-NO$_3$] des eaux en amont de la post-dénitrification,
      - de la concentration en nitrates [N-NO$_3$] souhaitée pour le mélange des deux fractions en aval du traitement de post-dénitrification,
      - et de la concentration en nitrates [N-NO$_3$] de la première fraction en sortie de la post-dénitrification, avant mélange des deux fractions,

   - et on contrôle l'injection de donneur d'électrons utilisé à l'aide :

      - d'une part, de la mesure (9, 27b) de la concentration en nitrates [N-NO$_3$] des eaux en amont de la post-dénitrification, et de la mesure (10) du débit des eaux résiduaires,
      - et d'autre part, d'une estimation de la charge azotée (concentration [N-NO$_3$]) de la première fraction en sortie de post-dénitrification, avant mélange des deux fractions, cette estimation étant calculée en fonction d'une mesure (14) de la concentration en nitrates [N-NO$_3$] en sortie de traitement après mélange des deux fractions, et du taux de dérivation utilisé,
      - on compare la valeur estimée ou mesurée du débit de donneur d'électrons à une valeur de consigne souhaitée, et on modifie le débit de donneur d'électrons injecté pour réduire l'écart entre valeur estimée et valeur souhaitée.

2. Procédé selon la revendication 1, **caractérisé en ce que** la première fraction des eaux résiduaires sort de l'étape de post-dénitrification avec une concentration en nitrates [N-NO$_3$] inférieure à 2 mg/L.

3. Procédé selon la revendication 1, **caractérisé en ce que** l'estimation de la concentration en nitrates [N-NO$_3$] de la première fraction en sortie de post-dénitrification est effectuée en logique floue pour définir une plage de valeurs possibles.

4. Procédé selon l'une quelconque des revendications précédentes, **caractérisé en ce que** l'on contrôle le débit de dérivation en déterminant une valeur du taux de dérivation, selon les concentrations en nitrates souhaitées aux différents endroits du traitement, et on la compare à des valeurs limites supérieure et inférieure (Qmax pdn, Qmin pdn), pour retenir une valeur de consigne comprise dans les limites imposées, et selon la comparaison de la valeur de consigne retenue à une valeur mesurée, on agit sur un organe (15) modifiant le débit de dérivation en vue d'atteindre la valeur de consigne.

5. Procédé selon l'une quelconque des revendications précédentes, **caractérisé en ce que** le donneur d'électrons est une source de carbone (19) choisie parmi le méthanol, l'acide acétique, le glycérol ou un composé carboné se dispersant aisément dans un réacteur dénitrifiant.

6. Procédé selon l'une quelconque des revendications précédentes, **caractérisé en ce que** l'on effectue une mesure (9) de la concentration en nitrates [N-NO$_3$] et une mesure (20) d'oxygène dissous dans l'eau en amont de la post-dénitrification pour estimer la charge azotée équivalente.

7. Procédé de dénitrification biologique d'eaux résiduaires qui comporte une séquence de nitrification-dénitrification, ladite séquence de nitrification-dénitrification permettant l'élimination de l'azote ammoniacal par une production de nitrates (nitrification) suivie d'une production d'azote gazeux N$_2$ par dénitrification (élimination des nitrates) qui consiste en la réduction des nitrates en nitrites puis en azote,
ladite séquence de nitrification-dénitrification étant suivie, pour une première fraction des eaux, d'une étape de post-dénitrification au cours de laquelle un donneur d'électrons est injecté dans cette première fraction, tandis qu'une deuxième fraction des eaux passe par une dérivation, puis est mélangée à la première fraction en aval de l'étape de post-dénitrification,
**caractérisé en ce que** :

- la première fraction des eaux résiduaires est soumise, lors de la post-dénitrification, à une dénitrification quasi complète afin de sortir de l'étape avec une concentration en nitrates [N-NO$_3$] inférieure à 4 mg/L, pour minimiser la production d'oxyde nitreux N$_2$O,
- on détermine le taux de dérivation à partir :

- d'une mesure de la concentration en nitrates [N-NO$_3$] des eaux en amont de la post-dénitrification,
- de la concentration en nitrates [N-NO$_3$] souhaitée pour le mélange des deux fractions en aval du traitement de post-dénitrification,
- et de la concentration en nitrates [N-NO$_3$] de la première fraction en sortie de la post-dénitrification, avant mélange des deux fractions,

- on mesure (10) le débit d'entrée d'eaux résiduaires à traiter avant dérivation,
- on calcule le débit de donneur d'électrons pour assurer la dénitrification de la fraction non dérivée en tenant compte du taux de dérivation,
- on estime la concentration en NO$_3$ en sortie de post dénitrification, avant mélange avec la fraction dérivée, à partir d'une mesure (14) de la concentration en NO$_3$ en aval du mélange de la fraction dérivée et de celle ayant subi la post dénitrification, et du taux de dérivation,
- un contrôle du débit de dérivation étant assuré pour limiter la perte de substrat carboné lié à l'oxygène dissous.

8. Installation pour la mise en œuvre du procédé selon la revendication 1 ou 7, **caractérisée en ce qu'**elle comporte

- des dispositifs de mesure de débit pour:

- une mesure (10) du débit dénoté par le terme FIT Qe en sortie d'un ouvrage aéré (3) ;

- une mesure de débit de dérivation dénoté par le terme FIT Qbp, soit par une instrumentation directe (17), soit par estimation à partir d'une mesure du débit d'entrée dénoté par le terme FIT Qe et du débit d'alimentation de la post dénitrification ;
- une mesure de débit en entrée d'ouvrage post dénitrification (6), soit par instrumentation (21), soit par estimation à partir d'une mesure du débit d'entrée dénoté par le terme FIT Qe et d'une mesure du débit de dérivation dénoté par le terme FIT Qbp ;

- un dispositif (13) de régulation du débit de dérivation ;
- des systèmes (9, 20, 14) de mesure de qualité d'eau, avec transmetteur adéquat,
- un dispositif (18, 23) de régulation du débit de donneur d'électrons.

**Patentansprüche**

1. Verfahren zur biologischen Denitrifikation von Abwasser, das eine Nitrifikations-Denitrifikations-Abfolge aufweist, wobei die Nitrifikations-Denitrifikations-Abfolge das Entfernen von ammoniakhaltigem Stickstoff durch eine Erzeugung von Nitraten (Nitrifikation) gefolgt von einer Erzeugung von gasförmigem Stickstoff $N_2$ durch Denitrifikation (Entfernen der Nitrate), die in der Reduktion der Nitrate in Nitrite und dann in Stickstoff besteht, gestattet, wobei der Nitrifikations-Denitrifikations-Abfolge, für eine erste Fraktion des Wassers, ein Schritt der Post-Denitrifikation folgt, bei dem ein Elektronendonator in diese erste Fraktion injiziert wird, während eine zweite Fraktion des Wassers durch einen Bypass geführt wird und dann mit der ersten Fraktion nach dem Schritt der Post-Denitrifikation gemischt wird, **dadurch gekennzeichnet, dass:**

   - die erste Fraktion des Abwassers, bei der Post-Denitrifikation, einer fast vollständigen Denitrifikation unterliegt, so dass sie aus dem Schritt mit einer Konzentration an Nitraten [$N-NO_3$] von weniger als 4 mg/l austritt, um die Erzeugung von Distickstoffmonoxid $N_2O$ zu minimieren,
   - und das Bypass-Verhältnis bestimmt wird anhand:

       - einer Messung der Konzentration an Nitraten [$N-NO_3$] des Wassers vor der Post-Denitrifikation,
       - der Konzentration an Nitraten [$N-NO_3$], die für das Mischen der zwei Fraktionen nach der Post-Denitrifikations-Behandlung gewünscht ist,
       - und der Konzentration an Nitraten [$N-NO_3$] der ersten Fraktion beim Austritt aus der Post-Denitrifikation, vor Mischen der zwei Fraktionen,

   - und die Injektion des verwendeten Elektronendonators kontrolliert wird mittels:

       - einerseits, der Messung (9, 27b) der Konzentration an Nitraten [$N-NO_3$] des Wassers vor der Post-Denitrifikation und der Messung (10) des Volumenstroms des Abwassers,
       - und, anderseits, einer Schätzung der Stickstoffmenge (Konzentration [$N-NO_3$]) der ersten Fraktion am Austritt aus der Post-Denitrifikation, vor Mischen der zwei Fraktionen, wobei diese Schätzung in Abhängigkeit einer Messung (14) der Konzentration an Nitraten [$N-NO_3$] am Austritt aus der Behandlung nach Mischen der zwei Fraktionen berechnet wird, und des verwendeten Bypass-Verhältnisses,

   - der geschätzte oder gemessene Wert des Volumenstroms des Elektronendonators mit einem gewünschten Sollwert verglichen wird und der Volumenstrom des injizierten Elektronendonators verändert wird, um die Abweichung zwischen geschätztem Wert und gewünschtem Wert zu reduzieren.

2. Verfahren nach Anspruch 1,
   **dadurch gekennzeichnet, dass**
   die erste Fraktion des Abwassers aus dem Schritt der Post-Denitrifikation mit einer Konzentration an Nitraten [$N-NO_3$] von weniger als 2 mg/l austritt.

3. Verfahren nach Anspruch 1,
   **dadurch gekennzeichnet, dass**
   die Schätzung der Konzentration an Nitraten [$N-NO_3$] der ersten Fraktion am Austritt aus der Post-Denitrifikation durch Fuzzylogik erfolgt, um einen Bereich möglicher Werte zu definieren.

4. Verfahren nach einem der vorhergehenden Ansprüche,

**dadurch gekennzeichnet, dass**

der Bypass-Volumenstrom kontrolliert wird, indem ein Wert des Bypass-Verhältnisses bestimmt wird, gemäß den gewünschten Konzentrationen an Nitraten an verschiedenen Stellen der Behandlung, und er mit einem oberen und unteren Grenzwert (Qmax pdn, Qmin pdn) verglichen wird, um einen Sollwert auszuwählen, der innerhalb der vorgegebenen Grenzen liegt, und gemäß dem Vergleich des ausgewählten Sollwerts mit dem gemessenen Wert auf ein Organ (15) eingewirkt wird, das den Bypass-Volumenstrom zum Zwecke des Erreichens des Sollwertes verändert.

5. Verfahren nach einem der vorhergehenden Ansprüche,
   **dadurch gekennzeichnet, dass**
   der Elektronendonator eine Kohlenstoffquelle (19) ist, die ausgewählt ist aus Methanol, Essigsäure, Glycerol oder einer in einem Denitrifikations-Reaktor leicht dispergierenden Kohlenstoffverbindung.

6. Verfahren nach einem der vorhergehenden Ansprüche,
   **dadurch gekennzeichnet, dass**
   eine Messung (9) der Konzentration an Nitraten [N-NO$_3$] und eine Messung (20) des in dem Wasser gelösten Sauerstoffs vor der Post-Denitrifikation durchgeführt wird, um die äquivalente Stickstoffmenge zu schätzen.

7. Verfahren zur biologischen Denitrifikation von Abwasser, das eine Nitrifikations-Denitrifikations-Abfolge aufweist, wobei die Nitrifikations-Denitrifikations-Abfolge das Entfernen von ammoniakhaltigem Stickstoff durch eine Erzeugung von Nitraten (Nitrifikation) gefolgt von einer Erzeugung von gasförmigem Stickstoff N$_2$ durch Denitrifikation (Entfernen der Nitrate), die in der Reduktion der Nitrate in Nitrite und dann in Stickstoff besteht, gestattet, wobei der Nitrifikations-Denitrifikations-Abfolge, für eine erste Fraktion des Wassers, ein Schritt der Post-Denitrifikation folgt, bei dem ein Elektronendonator in diese erste Fraktion injiziert wird, während eine zweite Fraktion des Wassers durch einen Bypass geführt wird und dann mit der ersten Fraktion nach dem Schritt der Post-Denitrifikation gemischt wird, **dadurch gekennzeichnet, dass:**

   - die erste Fraktion des Abwassers, bei der Post-Denitrifikation, einer fast vollständigen Denitrifikation unterliegt, so dass sie aus dem Schritt mit einer Konzentration an Nitraten [N-NO$_3$] von weniger als 4 mg/l austritt, um die Erzeugung von Distickstoffmonoxid N$_2$O zu minimieren,
   - und das Bypass-Verhältnis bestimmt wird anhand:

     - einer Messung der Konzentration an Nitraten [N-NO$_3$] des Wassers vor der Post-Denitrifikation,
     - der Konzentration an Nitraten [N-N03], die für das Mischen der zwei Fraktionen nach der Post-Denitrifikations-Behandlung gewünscht ist,
     - und der Konzentration an Nitraten [N-NO$_3$] der ersten Fraktion beim Austritt aus der Post-Denitrifikation, vor Mischen der zwei Fraktionen,

   - der Eintrittsvolumenstrom des zu behandelnden Abwassers vor dem Bypass gemessen (10) wird,
   - der Volumenstrom des Elektronendonators berechnet wird, um die Denitrifikation der nicht durch den Bypass geführten Fraktion unter Berücksichtigung des Bypass-Verhältnisses sicherzustellen,
   - die Konzentration an NO$_3$ am Austritt aus der Post-Denitrifikation, vor Mischen mit der durch den Bypass geführten Fraktion, anhand einer Messung (14) der Konzentration an NO$_3$ nach dem Mischen der durch den Bypass geführten Fraktion und der der Post-Denitrifikation unterzogenen Fraktion, und des Bypass-Verhältnisses geschätzt wird,
   - wobei eine Kontrolle des Bypass-Volumenstroms sichergestellt wird, um den Verlust an mit dem gelösten Sauerstoff verbundenem kohlenstoffhaltigem Substrat zu begrenzen.

8. Anlage zur Durchführung eines Verfahrens nach Anspruch 1 oder 7,
   **dadurch gekennzeichnet, dass**
   es aufweist:

   - Vorrichtungen zum Messen des Volumenstroms für:

     - eine Messung (10) des mit dem Begriff FIT Qe bezeichneten Volumenstroms am Austritt aus einem belüfteten Bauwerk (3);
     - eine Messung des mit dem Begriff FIT Qbp bezeichneten Bypass-Volumenstroms, entweder durch eine direkte Instrumentierung (17) oder durch Schätzung anhand einer Messung des mit dem Begriff FIT Qe bezeichneten Eintrittsvolumenstroms und des Volumenstroms zur Beschickung der Post-Denitrifikation;
- eine Messung des Volumenstroms am Eintritt des Post-Denitrifikations-Bauwerks (6), entweder durch Instrumentierung (21) oder durch Schätzung anhand einer Messung des mit dem Begriff FIT Qe bezeichneten Eintrittsvolumenstroms und einer Messung des mit dem Begriff FIT Qbp bezeichneten Bypass-Volumenstroms;

- eine Vorrichtung (13) zur Regelung des Bypass-Volumenstroms;
- Systeme (9, 20, 14) zur Messung der Wasserqualität, mit entsprechendem Messwertgeber,
- eine Vorrichtung (18, 23) zur Regelung des Elektronendonator-Volumenstroms.

**Claims**

1. A method for the biological denitrification of wastewater that comprises a nitrification-denitrification sequence, said nitrification-denitrification sequence allowing ammonia nitrogen to be removed by production of nitrates (nitrification) followed by production of gaseous nitrogen $N_2$ by denitrification (removal of nitrates), which consists of reduction of the nitrates to nitrites and then to nitrogen, said nitrification-denitrification sequence being followed, for a first fraction of the water, by a post-denitrification step during which an electron donor is injected into this first fraction, whereas a second fraction of the water passes through a bypass, and then is mixed with the first fraction downstream of the post-denitrification step, **characterized in that**:

   - the first fraction of the wastewater is submitted, during post-denitrification, to almost complete denitrification in order to exit the step with a concentration of nitrates $[N-NO_3]$ below 4 mg/L, to minimize the production of nitrous oxide $N_2O$,
   - and the bypass rate is determined from:

      - measurement of the concentration of nitrates $[N-NO_3]$ in the water upstream of post-denitrification,
      - the desired concentration of nitrates $[N-NO_3]$ for the mixture of the two fractions downstream of the post-denitrification treatment,
      - and the concentration of nitrates $[N-NO_3]$ in the first fraction at outlet from post-denitrification, before mixing the two fractions.

   - and the injection of electron donor used is controlled:

      - on the one hand, by measuring (9, 27b) the concentration of nitrates $[N-NO_3]$ in the water upstream of post-denitrification, and by measuring (10) the flow rate of the wastewater,
      - and on the other hand, by estimating the nitrogen-containing burden ($[N-NO_3]$ concentration) of the first fraction at outlet from post-denitrification, before mixing the two fractions, said estimate being calculated as a function of measurement (14) of the concentration of nitrates $[N-NO_3]$ at treatment outlet after mixing the two fractions, and of the bypass rate used,

   - the estimated or measured value of the electron donor flow rate is compared with a desired set value, and the flow rate of electron donor injected is altered to reduce the difference between estimated value and desired value.

2. The method as claimed in claim 1, **characterized in that** the first fraction of the wastewater leaves the post-denitrification step with a concentration of nitrates $[N-NO_3]$ below 2 mg/L.

3. The method as claimed in claim 1, **characterized in that** the concentration of nitrates $[N-NO_3]$ of the first fraction at outlet from post-denitrification is estimated using fuzzy logic to define a range of possible values.

4. The method as claimed in any one of the preceding claims, **characterized in that** the bypass flow rate is controlled by determining a value of the bypass rate, depending on the concentrations of nitrates desired at the various places of the treatment, and is compared with the upper and lower limit values (Qmax pdn, Qmin pdn), to adopt a set value that is within the limits imposed, and depending on the comparison of the set value adopted against a measured value, an element (15) is acted upon, altering the bypass flow rate in order to reach the set value.

5. The method as claimed in any one of the preceding claims, **characterized in that** the electron donor is a carbon source (19) selected from methanol, acetic acid, glycerol or a carbon-containing compound that disperses easily in a denitrifying reactor.

6. The method as claimed in any one of the preceding claims, **characterized in that** measurement (9) of the concentration of nitrates [N-NO$_3$] and measurement (20) of dissolved oxygen in the water upstream of post-denitrification are performed for estimating the equivalent nitrogen-containing burden.

7. A method for the biological denitrification of wastewater that comprises a nitrification-denitrification sequence, said nitrification-denitrification sequence allowing ammonia nitrogen to be removed by production of nitrates (nitrification) followed by production of gaseous nitrogen N$_2$ by denitrification (removal of nitrates), which consists of reduction of the nitrates to nitrites and then to nitrogen,
said nitrification-denitrification sequence being followed, for a first fraction of the water, by a post-denitrification step during which an electron donor is injected into this first fraction, whereas a second fraction of the water passes through a bypass, and then is mixed with the first fraction downstream of the post-denitrification step, **characterized in that**:

- the first fraction of the wastewater is submitted, during post-denitrification, to almost complete denitrification in order to exit the step with a concentration of nitrates [N-NO$_3$] below 4 mg/L, to minimize the production of nitrous oxide N$_2$O,
- and the bypass rate is determined from:

- measurement of the concentration of nitrates [N-NO$_3$] in the water upstream of post-denitrification,
- the desired concentration of nitrates [N-NO$_3$] for the mixture of the two fractions downstream of the post-denitrification treatment,
- and the concentration of nitrates [N-NO$_3$] in the first fraction at outlet from post-denitrification, before mixing the two fractions.

- a measurement (10) of the inlet flow rate of wastewater to be treated is performed before bypass,
- the electron donor flow rate for ensuring denitrification of the fraction not bypassed is calculated taking into account the bypass rate,
- the concentration of NO$_3$ at outlet from post-denitrification, before mixing with the bypassed fraction, is estimated based on measurement (14) of the concentration of NO$_3$ downstream of mixing of the bypassed fraction and of the fraction that underwent post-denitrification, and of the bypass rate,
- control of the bypass flow rate being is provided to limit the loss of carbon-containing substrate bound to the dissolved oxygen.

8. An installation for implementing the method as claimed in claim 1 or 7, **characterized in that** it comprises

- flow rate measuring devices for:

- measurement (10) of the flow rate referenced FIT Qe at outlet from an aerated unit (3);
- measurement of the bypass flow rate referenced FIT Qbp, either with direct instrumentation (17), or by estimation based on a measurement of the inlet flow rate referenced FIT Qe and the feed rate for post-denitrification;
- measurement of the inlet flow rate of the post-denitrification unit (6), either by instrumentation (21), or by estimation based on a measurement of the inlet flow rate referenced FIT Qe and a measurement of the bypass flow rate referenced FIT Qbp;

- a device (13) for regulating the bypass flow rate;
- systems (9, 20, 14) for measuring water quality, with a suitable transmitter,
- a device (18, 23) for regulating the electron donor flow rate.

FIG. 1

FIG. 2

*10*

Mesure
AIT NO3,e

Consigne
CNNO3,s

Consigne
CNNO3,pdn

**Calcul du taux de dérivation $\tau$**

$$\tau = \frac{CNNO\,3, s - CNNO\,3,\ pdn}{AIT\ NO\,3, e - CNNO\,3,\ pdn}$$

*11*

Mesure
FIT Qe

Consigne
Qmin, pdn

Consigne
Qmax,pdn

**Vérification du débit d'alimentation PDN**

Si $(1-\tau)$*FIT Qe < Qmin, pdn alors $\tau$ = (FIT Qe-Qmin,pdn)/FIT Qe
Si $(1-\tau)$*FIT Qe > Qmax, pdn alors $\tau$ = (FIT Qe-Qmax,pdn)/FIT Qe

*12*

**Envoi de la consigne de débit dérivation PDN**
Qdérivation = $\tau$ * FIT Qe

## FIG. 3

*27a*

Mesure AIT
O2

*27b*

Mesure AIT
NO3,e

*27c*

Consigne
CNNO3,pdn

*27*

Calcul équivalents NNO3 à éliminer

*28*

Prise en compte du facteur correctif
K

*29a*

Mesure
FIT Qe

*29b*

Consigne d
Concentration
substrat carboné

*29c*

Taux de
Dérivation

*29*

Calcul du débit de carbone externe
Qcex = fct(FIT Qe, r,ΔN,d,K)

*30a*

Mesure AIT
NO3,e

*30*

Calcul du capteur virtuel sortie PDN
AIT NO3,pdn = fct(AIT NO3,e; AIT NO3,s)

Mesure AIT
NO3,s

*30b*

*31*

Calcul de la dérive
Dérive = AITNO3, pdn - CNNO3,pdn

Calcul du coefficient correctif par
Fuzzification de la dérive

K = fuzz (Dérive)

*32*

Itérations

*26*

Envoi de la consigne de débit
Source carbonée

FIG. 4

17

FIG. 5

FIG. 6

**EP 3 019 452 B1**

## RÉFÉRENCES CITÉES DANS LA DESCRIPTION

### Documents brevets cités dans la description

- FR 2725193 A1